# EUROPÄISCHE PATENTANMELDUNG

(11) **EP 4 506 424 A1**
(43) Veröffentlichungstag der Anmeldung: **12.02.2025**
(21) Anmeldenummer: 24188103.6
(22) Anmeldetag: 11.07.2024
(51) Int. Cl.: C09D 11/101, C09D 11/103, C09D 11/102, C09D 11/30, C09D 4/06

(54) **STRAHLUNGSHÄRTBARE ZUSAMMENSETZUNG**

(30) Priorität: 07.08.2023 DE 102023120915
(71) Anmelder: Marabu GmbH & Co. KG, 71732 Tamm (DE)
(72) Erfinder: Rupp, Jochen, 71732 Tamm (DE); Böhringer, Oliver, 71364 Winnenden (DE); Lifka, Thorsten, 8635 Dürnten (CH); Lang, Tobias Christoph, 71332 Waiblingen (DE)
(74) Vertreter: Patentanwälte Ruff, Wilhelm, Beier, Dauster & Partner mbB

(57) **Zusammenfassung**

Die Erfindung betrifft eine strahlungshärtbare, vorzugsweise UV-härtbare Zusammensetzung, aufweisend
- wenigstens ein monofunktionelles Monomer und/oder wenigstens ein multifunktionelles Monomer,
- wenigstens eine Photoinitiatorverbindung und
- wenigstens ein Mattierungsmittel
wobei das wenigstens eine Mattierungsmittel wenigstens ein Aminoplast ist.

Die Erfindung betrifft ferner ein Verfahren zur Herstellung der strahlungshärtbaren Zusammensetzung, ein Verfahren zum Beschichten eines Substrats mit der strahlungshärtbaren Zusammensetzung, sowie ein mit der strahlungsgehärteten Zusammensetzung beschichtetes Substrat.

## Beschreibung

### ANWENDUNGSGEBIET UND STAND DER TECHNIK

Die Erfindung betrifft eine strahlungshärtbare, vorzugsweise UV-härtbare, Zusammensetzung, ein Verfahren zur Herstellung dieser strahlungshärtbaren, vorzugsweise UV-härtbaren, Zusammensetzung, ein Verfahren zum Beschichten, insbesondere Bedrucken, eines Substrats und ein Substrat, das mit der strahlungsgehärteten, vorzugsweise UV-gehärteten, Zusammensetzung beschichtet, insbesondere bedruckt, ist.

Die Digitaldrucktechnologie, insbesondere die Tintenstrahldrucktechnologie, wird in zunehmendem Maße für industrielle Druckaufgaben eingesetzt. Gegenüber analogen Verfahren zeichnet sich die Digitaldrucktechnologie durch eine erhöhte Flexibilität aus. Weitere Vorteile bestehen im Wegfall fester Druckvorlagen sowie in der Möglichkeit, berührungslos unterschiedlich geformte Gegenstände direkt, d. h. ohne Verwendung von Etiketten oder Aufklebern, zu dekorieren.

Eine besondere Herausforderung bei der Direktdekoration von Behältern aller Art, insbesondere Glasflaschen, besteht darin, eine Direktdekoration mit einer mattierten Oberfläche zu erzielen.

Konventionelle Zusammensetzungen enthalten zu diesem Zweck oftmals sogenannte Mattierungsmittel. Bekannt sind in diesem Zusammenhang unter anderem Zusammensetzungen, welche Mattierungsmittel auf Wachs-Basis und/oder Silikat-Basis enthalten. Nachteilig an diesem Ansatz ist, dass diese Mattierungsmittel in Form von Partikeln vorliegen, welche einem mittleren Partikeldurchmesser von über 10 µm aufweisen.

Dies führt in der Regel zu einer Beeinträchtigung der Eigenschaften der Zusammensetzungen. Beispielsweise sind diese Zusammensetzungen aufgrund des relativ großen Partikeldurchmessers nicht geeignet für einen Digitaldruck. Das liegt daran, dass die Partikel nicht durch die üblicherweise bei einem Digitaldruck verwendeten Druckkopfdüsen passen und daher die Druckkopfdüsen blockieren. Deswegen musste bisher zum Aufbringen einer mattierenden Zusammensetzung hauptsächlich auf ein Siebdruckverfahren ausgewichen werden.

### AUFGABE UND LÖSUNG

Die Erfindung stellt sich daher die Aufgabe, eine digital verdruckbare und mattierende Zusammensetzung bereitzustellen, welche Nachteile im Zusammenhang von konventionellen mattierenden Zusammensetzungen vermeidet und sich insbesondere beim Durchführen eines Digitaldrucks durch eine sehr gute Verdruckbarkeit auszeichnet. Weiterhin stellt sich die Erfindung insbesondere die Aufgabe, ein entsprechendes Verfahren zur Herstellung der Zusammensetzung, ein Beschichtungsverfahren sowie ein entsprechend beschichtetes Substrat bereitzustellen.

Diese Aufgaben werden gelöst durch eine Zusammensetzung mit den Merkmalen des unabhängigen Anspruchs 1, durch ein Herstellungsverfahren gemäß Anspruch 14, durch ein Beschichtungsverfahren gemäß Anspruch 15 sowie durch ein Substrat gemäß Anspruch 17. Bevorzugte Ausgestaltungen der Erfindung sind in den abhängigen Ansprüchen sowie in der Beschreibung definiert. Der Wortlaut sämtlicher Ansprüche wird hiermit durch Bezugnahme ausdrücklich zum Inhalt dieser Beschreibung gemacht.

Gemäß einem ersten Aspekt betrifft die Erfindung eine strahlungshärtbare, vorzugsweise UV-härtbare oder UV-härtende, Zusammensetzung, aufweisend
- wenigstens ein monofunktionelles Monomer und/oder wenigstens ein multifunktionelles Monomer,
- wenigstens eine Photoinitiatorverbindung und
- wenigstens ein Mattierungsmittel.

Bei dem wenigstens einen Mattierungsmittel handelt es sich um wenigstens ein Aminoplast, vorzugsweise wenigstens ein Harnstoffharz.

Bei der strahlungshärtbaren Zusammensetzung handelt es sich vorzugsweise um eine strahlungshärtbare, vorzugsweise UV-härtbare, mattierende Zusammensetzung.

Bei der strahlungshärtbaren Zusammensetzung handelt es sich weiter bevorzugt um eine strahlungshärtbare, vorzugsweise UV-härtbare, Tintenzusammensetzung, insbesondere mattierende Tintenzusammensetzung.

Alternativ kann es sich bei der strahlungshärtbaren Zusammensetzung bevorzugt um eine Beschichtungszusammensetzung, insbesondere eine Lackzusammensetzung oder eine Klarlackzusammensetzung, insbesondere eine mattierende Lackzusammensetzung oder eine mattierende Klarlackzusammensetzung handeln.

Insbesondere kann es sich bei der Lackzusammensetzung oder Klarlackzusammensetzung um Sprühlacke, Siebdrucklacke, Tauchlacke, Walzierungslacke oder Gießlacke handeln.

Bevorzugt handelt es sich bei der strahlungshärtbaren Zusammensetzung um eine strahlungshärtbare Zusammensetzung zum Beschichten oder Bedrucken, insbesondere Digitalbedrucken, eines Substrats und/oder einer Substratoberfläche.

Weiter bevorzugt handelt es sich bei dem Substrat und/oder der Substratoberfläche um ein Material, welches keine Flüssigkeit aufnehmen kann, das heißt ein nicht Flüssigkeit saugendes Material, insbesondere Glas, Kunststoff oder Metall.

Die strahlungsgehärtete, vorzugsweise UV-gehärtete, Zusammensetzung weist vorzugsweise eine Schichtdicke von 0,3 mm bis 2 mm auf dem Substrat auf.

Bevorzugt ist die strahlungshärtbare Zusammensetzung frei von einem nicht aushärtbaren Lösungsmittel, insbesondere einem nicht aushärtbaren organischen Lösungsmittel, bevorzugt frei von Alkoholen, Ketonen und/oder Estern. Das hat den Vorteil, dass die Emissionen durch Lösungsmitteldampf gering gehalten werden können und der maximalen Arbeitslast-Konzentration (MAK) entsprechen.

Unter dem Ausdruck "mattierende Zusammensetzung" soll im Sinne der vorliegenden Erfindung eine Zusammensetzung verstanden werden, die zum Beschichten oder Bedrucken, insbesondere Digitalbedrucken verwendet werden kann, um eine matte Beschichtung, insbesondere einen matten Druck, auf einem Substrat zu erzielen.

Unter dem Ausdruck "strahlungshärtbare, vorzugsweise UV-härtbare, Zusammensetzung" soll im Sinne der vorliegenden Erfindung eine Zusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Tintenzusammensetzung" soll im Sinne der vorliegenden Erfindung eine Tintenzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Lackzusammensetzung" soll im Sinne der vorliegenden Erfindung eine Lackzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Klarlackzusammensetzung" soll im Sinne der vorliegenden Erfindung eine Klarlackzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "Klarlackzusammensetzung" soll im Sinne der vorliegenden Erfindung eine transparente, d.h. lichtdurchlässige, insbesondere für elektromagnetische Strahlung oder elektromagnetische Wellen mit einer Wellenlänge von 380 nm bis 700 nm durchlässige, Lackzusammensetzung verstanden werden.

Unter dem Ausdruck "Lackzusammensetzung" soll im Sinne der vorliegenden Erfindung eine Beschichtungszusammensetzung verstanden werden, die, vorzugsweise dünn, auf Gegenstände aufgetragen wird und durch chemische und/oder physikalische Vorgänge, wie beispielsweise Verdampfen eines Lösungsmittels, zu einem Film, insbesondere durchgehenden, festen Film, aufgebaut wird.

Unter dem Ausdruck "ultraviolette Strahlung (UV-Strahlung)" soll im Sinne der vorliegenden Erfindung vorzugsweise eine Strahlung in einem Wellenlängenbereich von 100 nm bis 450 nm, insbesondere 100 nm bis 420 nm, verstanden werden.

Unter dem Ausdruck "monofunktionelle" Monomer" soll im Sinne der vorliegenden Erfindung ein Monomer mit lediglich einer funktionellen Gruppe pro Monomermolekül verstanden werden.

Der Ausdruck "wenigstens ein monofunktionelles Monomer" kann im Sinne der vorliegenden Erfindung nur ein monofunktionelles Monomer, das heißt nur ein Typ eines monofunktionellen Monomers, oder eine Vielzahl von unterschiedlichen monofunktionellen Monomeren bedeuten.

Unter dem Ausdruck "multifunktionelles Monomer" soll im Sinne der vorliegenden Erfindung ein Monomer verstanden werden, welches wenigstens zwei verschiedene funktionelle Gruppen aufweist.

Der Ausdruck "wenigstens ein multifunktionelles Monomer" kann im Sinne der vorliegenden Erfindung nur ein multifunktionelles Monomer, das heißt nur ein Typ eines multifunktionellen Monomers, oder eine Vielzahl von unterschiedlichen multifunktionellen Monomeren bedeuten.

Der Ausdruck "wenigstens eine Photoinitiatorverbindung" soll im Sinne der vorliegenden Erfindung eine Photoinitiatorverbindung, d.h. ein Typ einer Photoinitiatorverbindung, oder eine Vielzahl von unterschiedlichen Photoinitiatorverbindungen, d.h. zwei oder mehr unterschiedliche Photoinitiatorverbindungen, bedeuten. Dementsprechend kann die strahlungshärtbare, vorzugsweise UV-härtbare, Zusammensetzung beispielsweise nur eine Photoinitiatorverbindung, d.h. nur einen Typ einer Photoinitiatorverbindung oder eine Kombination oder Mischung von unterschiedlichen Photoinitiatorverbindungen aufweisen.

Unter dem Ausdruck "Photoinitiator vom Norrish Typ I" soll im Sinne der vorliegenden Erfindung ein Photoinitiator verstanden werden, der bei Einwirkung von elektromagnetischer Strahlung, vorzugsweise ultravioletter Strahlung (UV-Strahlung), in zwei Radikale zerfällt, meist durch eine sogenannte α-Spaltung. Die gebildeten Radikale können eine Kettenpolymerisation und/oder Vernetzung unter teilweiser oder vollständiger Aushärtung der strahlungshärtbaren, vorzugsweise UV-härtbaren, Zusammensetzung auslösen.

Unter dem Ausdruck "Photoinitiator vom Norrish Typ II" soll im Sinne der vorliegenden Erfindung ein Photoinitiator verstanden werden, der in der Lage ist, ein Wasserstoffatom von einem benachbarten Molekül zu abstrahieren. Dieses kann dann eine Kettenpolymerisation und/oder Vernetzung unter teilweiser oder vollständiger Aushärtung der strahlungshärtbaren, vorzugsweise UV-härtbaren, Zusammensetzung auslösen.

Unter dem Ausdruck "Mattierungsmittel" soll im Sinne der vorliegenden Erfindung ein Additiv oder eine Verbindung, insbesondere für mattierende Zusammensetzungen, verstanden werden, welches die Oberfläche der Zusammensetzung so beeinflusst, dass deren Glanzgrad sinkt und dadurch zu einer Mattierung führt. Bevorzugt bewirkt das Mattierungsmittel eine gezielte Rauheit der Beschichtungsoberfläche, wodurch eine diffuse Lichtstreuung entsteht, welche zu einer Mattierung führt.

Der Ausdruck "wenigstens ein Mattierungsmittel" kann im Sinne der vorliegenden Erfindung nur ein Mattierungsmittel, das heißt nur ein Typ eines Mattierungsmittels, oder eine Vielzahl von unterschiedlichen Mattierungsmitteln bedeuten.

Unter dem Ausdruck "Aminoplast" soll im Sinne der vorliegenden Erfindung ein Aminoharz oder Amidharz verstanden werden, bei dem es sich um ein aushärtbares Kunstharz, insbesondere Melaminharz, Dicyandiamidharz oder Harnstoffharz, handelt, das durch Polykondensation von Carbonyl-Verbindungen, insbesondere Formaldehyd, auch Methanal genannt, und Amin- oder Amid-Verbindungen, insbesondere Melamin, Dicyandiamid oder Harnstoff, gewonnen werden.

Unter dem Ausdruck "wenigstens ein Aminoplast" kann im Sinne der vorliegenden Erfindung nur ein Aminoplast, das heißt nur ein Typ eines Aminoplasts, oder eine Vielzahl von unterschiedlichen Aminoplasten bedeuten.

Die Erfindung basiert insbesondere auf dem überraschenden Befund, dass die erfindungsgemäße Zusammensetzung aufgrund ihrem, im Vergleich zu den aus dem Stand der Technik bekannten Zusammensetzungen, unterschiedlichem wenigstens einem Mattierungsmittel mit besonderem Vorteil digital, insbesondere mittels eines Tintenstrahldruckverfahrens, verdruckbar ist. Dies ist besonders vorteilhaft für das Beschichten, insbesondere Bedrucken, von Substraten, wie beispielsweise Flaschen und/oder Trinkgläser und anderen nicht Flüssigkeit saugenden Oberflächen.

Ein weiterer überraschender Effekt der erfindungsgemäßen Zusammensetzung besteht darin, dass durch die Verwendung eines Aminoplasten, insbesondere Harnstoffharz, als Mattierungsmittel der gewünschte Glanzgrad der Zusammensetzung gezielt und einfach durch Änderungen der Konzentration des wenigstens einen Mattierungsmittels eingestellt werden kann, insbesondere ohne eine Beeinträchtigung der Viskosität der Zusammensetzung und damit ohne eine Verschlechterung des Digitaldruckes zu riskieren. Dies ist besonders vorteilhaft, um eine sehr matte Oberfläche zu erzeugen, wie sie mit herkömmlichen Zusammensetzungen im Digitaldruck bisher nicht erzielbar ist.

Obendrein führt das erfindungsgemäß vorgesehene wenigstens eine Mattierungsmittel vorteilhafterweise dazu, dass erstmals durch ein Digitaldruckverfahren neben matten, insbesondere reflexionsarmen, Oberflächen, Oberflächen mit speziellen haptischen Eigenschaften, wie einer als besonders weich erscheinenden Oberfläche (Soft-Touch) oder Oberflächen mit einer besseren Griffigkeit, erzeugt werden können.

Weiterhin ist die erfindungsgemäße Zusammensetzung auch im Hinblick auf das beabsichtigte Beschichtungs- oder Bedruckungsergebnis von Vorteil und zeichnet sich insbesondere durch eine hohe mechanische und chemische Beständigkeit, insbesondere gegenüber Polieren, Kratzer, Nassabrieb und/oder Trockenabrieb, aus.

In Ausgestaltung der Erfindung handelt es sich bei dem wenigstens einen Aminoplast um einen Polymethylharnstoff.

Insbesondere Polymethylharnstoff eignet sich besonders gut als Mattierungsmittel, um die erfindungsgemäßen Vorteile der strahlungshärtbaren Zusammensetzung zu realisieren.

Bevorzugt handelt es sich bei dem Polymethylharnstoff um ein Harnstoff-Methanal-Polykondensat. Methanal ist auch unter der Bezeichnung Formaldehyd bekannt. Weiter bevorzugt handelt es sich bei dem Polymethylharnstoff um ein Duroplast.

Weiter bevorzugt lässt sich der Polymethylharnstoff als amorphe, insbesondere amorphe partikuläre, Struktur herstellen, was sich von besonderem Vorteil für die Mattierungswirkung der Zusammensetzung herausgestellt hat.

Weiterhin kann der Polymethylharnstoff 0,20 % bis 0,30 %, insbesondere 0,25% freie Hydroxylgruppen aufweisen, wodurch eine Vernetzung des Polymethylharnstoffes, insbesondere mit Isocyanaten, erfolgen kann.

Bevorzugt zeichnet sich der Polymethylharnstoff durch eine Hitzebelastbarkeit von 200°C bis 300°C und/oder einer Härte von 3,0 Mohs bis 4,0 Mohs, insbesondere 3,5 Mohs, aus.

Unter dem Ausdruck "Polymethylharnstoff" soll im Sinne der vorliegenden Erfindung ein Aminoplast verstanden werden, der durch eine Additionsreaktion von Harnstoff und Methanal zu Harnstoffmethylol und einer anschließenden Kondensationsreaktion von Harnstoffmethylol Einheiten hergestellt ist. Durch die in diesem Absatz beschriebene Reaktion lässt sich eine dreidimensionale Molekülstruktur herstellen, welche die amorphe Struktur des Polymethylharnstoffs vorteilhaft beeinflussen kann.

In weiterer Ausgestaltung der Erfindung weist das wenigstens eine Mattierungsmittel, insbesondere der wenigstens eine Aminoplast, einen Anteil von 10 Gew.- % bis 60 Gew.-%, insbesondere 15 Gew.-% bis 60 Gew.-%, vorzugsweise 20 Gew.-% bis 50 Gew.-%, insbesondere 25 Gew.-%, auf, bezogen auf das Gesamtgewicht der strahlungshärtbaren Zusammensetzung. Insbesondere die in diesem Absatz offenbarten Anteile für das wenigstens eine Mattierungsmittel, insbesondere für den wenigstens einen Aminoplasten, haben sich unter Mattierungs- sowie Druckbarkeitsgesichtspunkten der Zusammensetzung als besonders vorteilhaft erwiesen.

Die im vorherigen Absatz beschriebenen Anteile, an dem wenigstens einen Mattierungsmittel haben sich als besonders vorteilhaft für die Mattierungseigenschaft der strahlungshärtbaren Zusammensetzung erwiesen.

In weiterer Ausgestaltung der Erfindung weist die strahlungshärtbare Zusammensetzung neben dem wenigstens einen Aminoplasten kein weiteres Mattierungsmittel auf.

Bevorzugt ist die strahlungshärtbare Zusammensetzung frei von einem anorganischen Mattierungsmittel, insbesondere ausgewählt aus der Gruppe bestehend aus Silikaten, insbesondere pyrogene Silikate, gefällte Silikate, wachsmodifizierte Silikate, oder silanmodifizierte Silikate, mineralische Füllstoffe und Kombination von mindestens zwei der zuvor genannten anorganischen Mattierungsmittel.

Weiter bevorzugt ist die strahlungshärtbare Zusammensetzung neben dem wenigstens einen Mattierungsmittel, insbesondere dem wenigstens einen Aminoplasten, frei von einem weiteren organischen Mattierungsmittel, insbesondere ausgewählt aus der Gruppe bestehend aus duromere Polyurethane, thermoplastische Polymere, insbesondere Polyacrylate, Polyurethane oder Polyamide, Wachse, insbesondere unmodifizierte Polyethylen-Wachse, modifizierte Polyethylen-Wachse, Polypropylen-Wachse oder Polyamid-Wachse und Kombination von mindestens zwei der zuvor genannten Mattierungsmittel.

In weiterer Ausgestaltung der Erfindung weist die strahlungshärtbare Zusammensetzung wenigstens ein Netzmittel auf.

Der Ausdruck "wenigstens ein Netzmittel" kann im Sinne der vorliegenden Erfindung nur ein Netzmittel, das heißt nur ein Typ eines Netzmittels, oder eine Vielzahl von unterschiedlichen Netzmitteln bedeuten.

Bevorzugt handelt es sich bei dem wenigstens einen Netzmittel um ein Netzmittel ausgewählt aus der Gruppe bestehend aus anionischen Netzmitteln, kationischen Netzmitteln, nichtionischen Netzmitteln und Mischungen von wenigstens zwei der vorgenannten Netzmittel.

Weiter bevorzugt ist das wenigstens eine Netzmittel ein Polyurethan, insbesondere ein mit mindestens einer funktionellen Gruppe modifiziertes Polyurethan oder eine Mischung von wenigstens zwei Polyurethanen, insbesondere mit mindestens einer funktionellen Gruppe modifiziertes Polyurethan.

Die genannten Netzmittel können in vorteilhafter Weise als oberflächenaktive Substanzen wirken und durch Benetzung der Komponenten der Zusammensetzung, bevorzugt das wenigstens eine Mattierungsmittel, insbesondere der wenigstens eine Aminoplast, weiter bevorzugt Mattierungsmittelpartikel, insbesondere Aminoplastpartikel, verhindern, dass die Komponenten aneinanderhaften, insbesondere verklumpen, ohne die Viskosität der strahlungshärtbaren Zusammensetzung nachteilig zu beeinflussen, insbesondere zu stark herabzusetzen.

Bevorzugt weist das wenigstens eine Netzmittel einen Anteil von 0,1 Gew.-% bis 10 Gew.-%, insbesondere 0,2 Gew.-% bis 7 Gew.-%, vorzugsweise 0,5 Gew.-% bis 5 Gew.-%, auf, bezogen auf das Gesamtgewicht der Zusammensetzung. Insbesondere die in diesem Absatz offenbarten Anteile für das wenigstens eine Netzmittel haben sich unter Druckbarkeitsgesichtspunkten der Zusammensetzung als besonders vorteilhaft erwiesen.

In weiterer Ausgestaltung der Erfindung liegt das wenigstens eine Mattierungsmittel, insbesondere der wenigstens eine Aminoplast, bevorzugt in der strahlungshärtbaren Zusammensetzung, in Form von Partikeln vor.

Bevorzugt handelt es sich bei dem Mattierungsmittel, insbesondere dem wenigstens einen Aminoplasten, in Form von Partikeln um Partikel, welche den wenigstens einen Aminoplasten, insbesondere Polymethylharnstoff, aufweisen oder aus dem wenigstens einen Aminoplast, insbesondere Polymethylharnstoff, bestehen.

Bevorzugt haben die Partikel einem mittleren Partikeldurchmesser ≤ (kleiner gleich) 10 µm, insbesondere von 0,5 µm bis 5 µm, vorzugsweise von 0,6 µm bis 1,3 µm. Beispielsweise bestimmt mittels dynamischer oder statischer Laserlichtstreuung. Insbesondere die in diesem Absatz offenbarten Partikeldurchmesser des wenigstens einen Mattierungsmittel haben sich unter Mattierungs- sowie Druckbarkeitsgesichtspunkten der Tintenzusammensetzung als besonders vorteilhaft erwiesen. Ein weiterer Vorteil der in diesem Absatz offenbarten Partikeldurchmesser ist es, dass die Partikel ungehindert die Druckkopfdüse eines Digitaldruckers passieren können.

In weiterer Ausgestaltung der Erfindung ist das wenigstens eine Mattierungsmittel, insbesondere der wenigstens eine Aminoplast, eine Mischung von wenigstens zwei unterschiedlichen Aminoplasten.

Bevorzugt handelt es sich bei den unterschiedlichen Aminoplasten um Polymethylharnstoff.

In weiterer Ausgestaltung der Erfindung weist das erste Mattierungsmittel und das zweite Mattierungsmittel voneinander unterschiedliche mittlere Partikeldurchmesser auf.

Bevorzugt handelt es sich bei den wenigstens zwei unterschiedlichen Aminoplasten um Polymethylharnstoff mit unterschiedlichen mittleren Partikeldurchmessern. In anderen Worten unterscheiden sich die wenigstens zwei Aminoplasten vorzugsweise, insbesondere ausschließlich, durch einen unterschiedlichen mittleren Partikeldurchmesser voneinander.

Bevorzugt weist 0,5 % bis 15 %, bevorzugt 1 % bis 10 %, insbesondere 1,5 % eines Aminoplasten der wenigstens zwei unterschiedlichen Aminoplasten einen mittleren Partikeldurchmesser > (größer) 1 µm, insbesondere von 1 µm bis 10 µm, bevorzugt von 0,5 µm bis 5 µm, weiter bevorzugt von 0,6 µm bis 1,3 µm, auf.

Weiter bevorzugt weist 0,5 % bis 15 %, bevorzugt 1 % bis 10 %, insbesondere 1,2 % eines Aminoplasten der wenigstens zwei unterschiedlichen Aminoplasten einen mittleren Partikeldurchmesser > 1 µm, insbesondere von 1 µm bis 10 µm, bevorzugt von 0,5 µm bis 5 µm, weiter bevorzugt von 0,6 µm bis 1,3 µm, auf.

Bevorzugt liegt die Verteilung der Partikeldurchmesser des ersten und des zweiten Mattierungsmittel bei 0,6 µm D50, 0,8 µm D90 und 1,3 µm D99.

Unter der Angabe "D50" soll im Sinne der vorliegenden Erfindung vorzugsweise eine Verteilung des Partikeldurchmessers verstanden werden, bei welchem 50% aller Partikel kleiner als der dazu angegebene Durchmesser ist.

Unter der Angabe "D90" soll im Sinne der vorliegenden Erfindung vorzugsweise eine Verteilung des Partikeldurchmessers verstanden werden, bei welchem 90% aller Partikel kleiner als der dazu angegebene Durchmesser ist.

Unter der Angabe "D99" soll im Sinne der vorliegenden Erfindung vorzugsweise eine Verteilung des Partikeldurchmessers verstanden werden, bei welchem 99% aller Partikel kleiner als der dazu angegebene Durchmesser ist.

In weiterer Ausgestaltung der Erfindung ist das wenigstens eine monofunktionelle Monomer ausgewählt aus der Gruppe bestehend aus Acrylat-Monomer, Methacrylat-Monomer, Acrylamid-Monomer, insbesondere 4-Acryloylmorpholin, N-Vinylamid-Monomer, Vinylacrylat-Monomer und Mischungen von wenigstens zwei der vorgenannten monofunktionellen Monomere.

Bevorzugt ist das wenigstens eine monofunktionelle Monomer ein Acrylat-Monomer und/oder Methacrylat-Monomer, insbesondere ausgewählt aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 3,3,5- Trimethylcyclohexylacrylat, 4-Hydroxybutylacrylat, Isooctylacrylat, 2-(2- Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, 2-N-Morpholinoethylmethacrylat und Mischungen von wenigstens zwei der vorgenannten monofunktionellen Acrylat-Monomere und/oder Methacrylat-Monomere.

Weiter bevorzugt ist das wenigstens eine monofunktionelle Monomer ein N-Vinylamid-Monomer oder ein Vinylacrylat-Monomer, ausgewählt ist aus der Gruppe bestehend aus N-Vinylcaprolactam, N-Vinylpyrrolidon, Vinylmethyloxazolidinon (VMOX), 2-(2-Vinyloxyethoxy)ethylacrylat (VEEA), 2-(2-Vinyloxyethoxy)ethylmethacrylat und Mischungen von wenigstens zwei der vorgenannten Monomere.

Bevorzugt weist das wenigstens eine monofunktionelle Monomer einen Anteil von 1 Gew.-% bis 40 Gew.-%, insbesondere 2 Gew.-% bis 35 Gew.-%, vorzugsweise 5 Gew.-% bis 30 Gew. %, besonders bevorzugt 5 Gew. % bis 20 Gew.-%, auf, bezogen auf das Gesamtgewicht der strahlungshärtbaren, vorzugsweise UV-härtbaren, Zusammensetzung.

Für die Haftung der strahlungshärtbaren Zusammensetzung auf einem Substrat haben sich die im vorherigen Absatz beschriebenen Anteile als besonders vorteilhaft erwiesen. Insbesondere kann der im vorherigen Absatz beschriebene Anteil, an dem wenigstens einen monofunktionellen Monomer eine niedrige Netzwerkdichte der strahlungshärtbaren Zusammensetzung erzielen, welche sich als besonders vorteilhaft für die Haftung auf nicht saugenden Untergründen erwiesen hat.

In weiterer Ausgestaltung der Erfindung ist das wenigstens eine multifunktionelle Monomer ausgewählt aus der Gruppe bestehend aus Acrylat-Monomer, insbesondere Diacrylat-Monomer, Methacrylat-Monomer, Acrylamid-Monomer, insbesondere 4-Acryloylmorpholin, N-Vinylamid-Monomer, Vinylacrylat-Monomer und Mischungen von wenigstens zwei der vorgenannten monofunktionellen Monomere.

Bevorzugt ist das das wenigstens eine multifunktionelle Monomer ein Acrylat-Monomer und/oder Methacrylat-Monomer, insbesondere ausgewählt aus der Gruppe bestehend aus (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat und Mischungen von wenigstens zwei der vorgenannten multifunktionellen Acrylat-Monomere und/oder Methacrylat-Monomere.

Bevorzugt weist das wenigstens eine multifunktionelle Monomer einen Anteil von 10 Gew.-% bis 60 Gew.-%, insbesondere 15 Gew.-% bis 55 Gew.-%, vorzugsweise 20 Gew.-% bis 50 Gew.-%, auf, bezogen auf das Gesamtgewicht der strahlungshärtbaren, vorzugsweise UV-härtbaren, Zusammensetzung.

In weiterer Ausgestaltung der Erfindung weist der wenigstens eine Photoinitiator ein Photoinitiator vom Norrish Typ I oder ein Photoinitiator vom Norrish Typ II oder ein Gemisch von Photoinitiatoren vom Norrish Typ I und/oder Norrish Typ II auf.

Bevorzugt ist der wenigstens eine Photoinitiator ausgewählt aus der Gruppe bestehend aus monomere Benzophenonderivate, polymere Benzophenonderivate, Benzylketone, monomere Hydroxyketone, polymere Hydroxyketone, α-Aminoketone, Phosphinoxidderivate, Acylphosphinoxide, Metallocene, Benzoinether, Benzilketale, α-Hydroxyalkylphenone, α-Aminoalkylphenone, monomere Thioxantonderivate, polymere Thioxantonderivate, Isopropylthioxanthenone, Arylsulfoniumsalze, Aryliodoniniumsalze, Oximderivate, Imidazolderivate und Mischungen aus mindestens zwei der genannten Photoinitiatoren.

Weiter bevorzugt ist der wenigstens eine Photoinitiator ausgewählt aus der Gruppe bestehend aus Ethyl-(2,4,6-Trimethylbenzoyl)phenylphosphinat, Isobutyldibenzoylphosphinoxid, Diphenyl-(2,4,6-trimethylbenzoyl)-phosphinoxid, 1- Methyl-(2,6-dimethoxybenzoyl)phenylphosphinoxid, Methylisobutyrylmethyl-phosphinat, Isopropylpivaloylphenylphosphinat, Methyl-p-toluoylphenylphosphinat, Methyl-o-toluoylphenylphosphinat, Isopropyl-p-tert-butylbenzoylphenylphosphinat, Methyl-acryloylphenylphosphinat, o-Toluoylphenylphosphinoxid, Vinyl-pivaloylphenylphosphinat, Methyl-pivaloylphenylphosphinat, Isopropylpivaloylphenylphosphinat, Bis(2,6-dichlorobenzoyl)phenylphosphinoxid, Bis(2,6-dichlorobenzoyl)-2,5-dimethylphenylphosphinoxid, Bis(2,6-dichlorobenzoyl)-4-ethoxy-phenylphosphinoxid, Bis(2,6-dichlorobenzoyl)-4-propylphenylphosphinoxid, Bis(2,6- dichloro-benzoyl)-2-naphtylphosphinoxid, Bis(2,6-dichlorobenzoyl)-1-naphtylphosphinoxid, Bis(2,6-dichlorobenzoyl)-4-chlorophenylphosphinoxid, Bis(2,6-dichlorobenzoyl)-2,4-dimethoxyphenylphosphinoxid, Bis(2,6-dichlorobenzoyl)ethylphosphinoxid, Bis(2,6-dichlorobenzoyl)-4-octylphenylphosphinoxid, Bis(2,4,6-trimethylbenzoyl)phenylphosphinoxid, Bis(2,4,6-trimethylbenzoyl)-2,5-dimethylphenylphosphinoxid, Bis(2,6-dichloro-3,4,5-trimethoxybenzoyl)-2,5-dimethylphenylphosphinoxid, Bis(2,6-dichloro-3,4,5-trimethoxybenzoyl)-4-ethoxyphenylphosphinoxid, Bis(2-methyl-1-naphthyl)-2,5-dimethylphenylphospinoxid, Bis(2-methyl-1-naphthyl)-4-ethoxyphenylphosphinoxid, Bis(2-methyl-1-naphthyl)-2-naphthylphosphinoxid, Bis(2-methyl-1-naphthyl)-4-propylphenylphosphinoxid, Bis(2-methyl-1-naphthyl)-2,5-trimethylphenylphosphinoxid, Bis(2-methoxy-1-naphthyl)-4-ethoxyphenylphosphinoxid, Bis(2-chloro-1-naphthyl)-2,5-dimethylphenylphosphinoxid, Bis(2,6-dimethoxybenzoyl)-2,4,6-trimethylpentylphosphinoxid und Mischungen von wenigstens zwei der vorgenannten Photoinitiatoren.

Weiter bevorzugt weist der wenigstens eine Photoinitiator einen Anteil von 1 Gew.-% bis 20 Gew.-%, insbesondere 2 Gew.-% bis 25 Gew.-%, vorzugsweise 3 Gew.-% bis 15 Gew.-%, auf, bezogen auf das Gesamtgewicht der strahlungshärtbaren, vorzugsweise UV-härtbaren, Zusammensetzung.

In weiterer Ausgestaltung der Erfindung weist die strahlungshärtbare Zusammensetzung bei 40 °C und einer Schergeschwindigkeit von 2000 s-1 eine Viskosität von 3 mPas bis 150 mPas, insbesondere 4 mPas bis 140 mPas, vorzugsweise 5 mPas bis 120 mPas, auf.

Vorteilhafterweise weist das wenigstens eine Mattierungsmittel, insbesondere der wenigstens eine Aminoplast, im Vergleich zu herkömmlichen Mattierungsmitteln einen vergleichsweisen geringen Einfluss auf die Viskosität und die Rheologie Eigenschaften der Zusammensetzung auf. Das ermöglicht im Vergleich zu herkömmlichen Mattierungsmitteln die Verwendung eines vergleichsweise hohen Gewichtsanteils in der strahlungshärtbaren Zusammensetzung, ohne die Viskosität und die Rheologieeigenschaften der Zusammensetzung negativ zu beeinflussen.

Unter dem Ausdruck "Viskosität" soll im Sinne der vorliegenden Erfindung vorzugsweise eine Scherviskosität verstanden werden. Hiermit ist der Widerstand der erfindungsgemäßen Zusammensetzung gegenüber Scherung gemeint. Die Viskosität wird vorzugsweise mit einem Viskosimeter, insbesondere gemäß EN ISO 3219, gemessen. Insbesondere kann die Viskosität im Sinne der vorliegenden Erfindung mit Hilfe eines Rheometers, beispielsweise eines Rheometers mit der Bezeichnung "MCR 302" (Hersteller: Anton Paar), bei 40 °C bei einer Schergeschwindigkeit von 2000 s-1 gemessen werden.

In weiterer Ausgestaltung der Erfindung weist die strahlungshärtbare Zusammensetzung einen Glanzgrad ≤ (kleiner gleich) 60 GE, insbesondere von < (kleiner) 55 GE bis <50 GE, vorzugsweise <45 GE bis <40 GE, auf. Vorzugsweise wurden die in diesem Absatz gemessene Glanzgrade bei 60° in einem Glanzmesser gemessen.

Unter dem Ausdruck "Glanzgrad" soll im Sinne der vorliegenden Erfindung vorzugsweise eine Maßzahl dafür verstanden werden, wie stark ein einfallender Lichtstrahl von der strahlungshärtbaren Zusammensetzung, insbesondere die auf ein Substrat aufgebrachte und ausgehärtete Zusammensetzung, reflektiert wird. Der Glanzgrad wird vorzugsweise mit einem Glanzmesser, auch Reflektometer genannt, gemessen. Mit diesem lässt sich der Glanz in der Maßeinheit GE (Glanz Einheit) messen. Konkret wird der Begriff Glanz dabei definiert als das Verhältnis zwischen dem eingestrahlten Licht und dem von der Oberfläche reflektierten Licht unter dem jeweils gewählten Winkel der spiegelnden Reflexion. In anderen Worten definiert der Glanzgrad wie matt die Zusammensetzung, insbesondere die auf ein Substrat aufgebrachte und ausgehärtete Zusammensetzung, ist.

In weiterer Ausgestaltung der Erfindung weist die strahlungshärtbare Zusammensetzung ferner mindestens einen Zusatzstoff auf, welcher ausgewählt ist aus der Gruppe bestehend aus Stabilisator, Bindemittel, Dispergieradditv, Füllstoff, Verlaufsadditiv und Mischungen aus mindestens zwei der genannten Zusatzstoffe.

Bevorzugt weist die strahlungshärtbare Zusammensetzung einen Anteil an Zusatzstoffen von 0,1 Gew.-% bis 15 Gew.-%, insbesondere 0,5 Gew.-% bis 10 Gew.-%, bevorzugt 1 Gew.-% bis 10 Gew.-%, auf, bezogen auf das Gesamtgewicht der strahlungshärtbaren Zusammensetzung.

Unter dem Ausdruck "Stabilisator" soll im Sinne der vorliegenden Erfindung ein Zusatzstoff verstanden werden, welcher freie Radikale in einer Zusammensetzung bindet, um zu vermeiden, dass es zu einem ungewollten Start der Polymerisation kommt.

Bevorzugt handelt es sich bei dem Stabilisator um ein Polymer, bevorzugt ein Copolymer, besonders bevorzugt ein Blockcopolymer. Ferner kann der Stabilisator gelöst sein in Dicarbonsäureester. Besonders bevorzugt kann es sich bei dem Stabilisator um einen unter dem Handelsnamen Genorad 20 bekannten Stabilisator handeln. Die strahlungshärtbare Zusammensetzung kann einen Anteil an dem Stabilisator von 0,1 Gew.-% bis 10 Gew.-%, insbesondere 0,5 Gew.-% bis 5 Gew.-%, bevorzugt 0,5 Gew.-% bis 2 Gew.-%, aufweisen, bezogen auf das Gesamtgewicht der strahlungshärtbaren Zusammensetzung.

Unter dem Ausdruck "Bindemittel" soll im Sinne der vorliegenden Erfindung ein Zusatzstoff verstanden werden, welcher rheologiemodifizierende Eigenschaften besitzt und mit besonderem Vorteil bewirkt, dass eine nachteilige Bodensatzbildung in der strahlungshärtbaren Zusammensetzung vermieden werden kann.

Bevorzugt handelt es sich bei dem Bindemittel um eine Urethan-Verbindung, bevorzugt ein Urethan Acrylat, weiter bevorzugt ein aliphatisches Urethan Acrylat, besonders bevorzugt ein aliphatisches Urethan Diacrylat. Die strahlungshärtbare Zusammensetzung kann einen Anteil an dem Bindemittel von 0,1 Gew.-% bis 10 Gew.-%, insbesondere 1 Gew.-% bis 8 Gew.-%, bevorzugt 3 Gew.-% bis 7 Gew.-%, aufweisen, bezogen auf das Gesamtgewicht der strahlungshärtbaren Zusammensetzung.

Unter dem Ausdruck "Dispergieradditiv" soll im Sinne der vorliegenden Erfindung ein Zusatzstoff verstanden werden, welcher dazu vorgesehen ist, Komponenten der Zusammensetzung, bevorzugt das wenigstens eine Mattierungsmittel, insbesondere der wenigstens eine Aminoplast, weiter bevorzugt Mattierungsmittelpartikel, insbesondere Aminoplastpartikel, der strahlungshärtbaren Zusammensetzung über sterische Hinderung zu stabilisieren. Bevorzugt erzeugt das Dispergieradditiv eine elektrische Ladung der Komponenten wobei der daraus resultierende Abstoßungseffekt und die sterische Stabilisierung verhindern, dass eine mögliche Co-Flockulation auftritt.

Bevorzugt handelt es sich bei dem Dispergieradditiv um ein Polyurethan, bevorzugt insbesondere ein mit mindestens einer funktionellen Gruppe modifiziertes Polyurethan oder eine Mischung von wenigstens zwei Polyurethanen, insbesondere mit mindestens einer funktionellen Gruppe modifiziertes Polyurethan. Besonders bevorzugt kann es sich bei dem Dispergieradditiv um ein unter dem Handelsnamen Disperbyk-168 bekanntes Dispergieradditiv handeln. Die strahlungshärtbare Zusammensetzung kann einen Anteil an dem Dispergieradditiv von 0,1 Gew.-% bis 10 Gew.-%, insbesondere 1 Gew.-% bis 6 Gew.-%, bevorzugt 1 Gew.-% bis 3 Gew.-%, aufweisen, bezogen auf das Gesamtgewicht der strahlungshärtbaren Zusammensetzung.

Unter dem Ausdruck "Verlaufsadditiv" soll im Sinne der vorliegenden Erfindung ein Zusatzstoff verstanden werden, welcher dazu vorgesehen ist, Unebenheiten auf eine Oberfläche auszugleichen.

Gemäß einem zweiten Aspekt betrifft die Erfindung ein Verfahren zur Herstellung einer strahlungshärtbaren, vorzugsweise UV-härtbaren, Zusammensetzung, insbesondere gemäß erstem Erfindungsaspekt, aufweisend nachfolgende Schritte:
a) Bereitstellen einer ersten mattierungsmittelhaltigen Zusammensetzung und einer zweiten mattierungsmittelhaltigen Zusammensetzung,
b) Mischen der ersten mattierungsmittelhaltigen Zusammensetzung und der zweiten mattierungsmittelhaltigen Zusammensetzung wobei
   - das Mattierungsmittel der ersten mattierungsmittelhaltigen Zusammensetzung eine von dem Mattierungsmittel der zweiten mattierungsmittelhaltigen Zusammensetzung verschiedene mittlere Partikeldurchmesserverteilung aufweist und/oder
   - die erste mattierungsmittelhaltige Zusammensetzung frei von einem Netzmittel ist und die zweite mattierungsmittelhaltige Zusammensetzung ein Netzmittel enthält.

Bevorzugt können die erste mattierungsmittelhaltige Zusammensetzung und die zweite mattierungsmittelhaltige Zusammensetzung ferner wenigstens ein voneinander unterschiedliches oder identisches monofunktionelles Monomer und/oder multifunktionelles Monomer aufweisen.

Das Verfahren kann ferner einen Schritt c) Zugeben von einem Bindemittel, insbesondere eine Urethan-Verbindung, bevorzugt ein Urethan Acrylat, weiter bevorzugt ein aliphatisches Urethan Acrylat, besonders bevorzugt ein aliphatisches Urethan Diacrylat, aufweisen, um eine nachteilige Bodensatzbildung vorteilhaft vermeiden zu können.

Bevorzugt handelt es sich bei der ersten mattierungsmittelhaltigen Zusammensetzung und der zweiten mattierungsmittelhaltigen Zusammensetzung, um eine aminoplasthaltige, insbesondere polymethylharnstoffhaltige, Zusammensetzung.

Bevorzugt weist die erste mattierungsmittelhaltige Zusammensetzung kein Netzmittel auf.

Weiter bevorzugt weist die zweite mattierungshaltige Zusammensetzung ein Netzmittel auf, insbesondere ist das Mattierungsmittel der zweiten mattierungsmittelhaltigen Zusammensetzung mit einem Netzmittel dispergiert.

Bevorzugt weist die erste mattierungsmittelhaltige Zusammensetzung und die zweite mattierungsmittelhaltige Zusammensetzung Partikel auf, welche wenigstens einen Aminoplasten, insbesondere Polymethylharnstoff, aufweisen oder aus wenigstens einen Aminoplast, insbesondere Polymethylharnstoff, bestehen.

Bevorzugt weisen 0,5% bis 3 %, bevorzugt 1 % bis 2 %, insbesondere 1,5 % der Partikel der ersten mattierungsmittelhaltige Zusammensetzung einen mittleren Partikeldurchmesser > 1 µm, insbesondere von 1 µm bis 10 µm, bevorzugt von 0,5 µm bis 5 µm, weiter bevorzugt von 0,6 µm bis 1,3 µm, auf.

Weiter bevorzugt weisen 0,5 % bis 3 %, bevorzugt 1 % bis 3 %, insbesondere 1,2 % der Partikel der zweiten mattierungsmittelhaltige Zusammensetzung einen mittleren Partikeldurchmesser > 1 µm, insbesondere von 1 µm bis 10 µm, bevorzugt von 0,5 µm bis 5 µm, weiter bevorzugt von 0,6 µm bis 1,3 µm, auf.

Bevorzugt liegt die Verteilung der Partikeldurchmesser des ersten und des zweiten Mattierungsmittel bei 0,6 µm D50, 0,8 µm D90 und 1,3 µm D99.

Unter der Angabe "D50" soll im Sinne der vorliegenden Erfindung vorzugsweise eine Verteilung des Partikeldurchmessers verstanden werden, bei welchem 50% aller Partikel kleiner als der dazu angegebene Durchmesser ist.

Unter der Angabe "D90" soll im Sinne der vorliegenden Erfindung vorzugsweise eine Verteilung des Partikeldurchmessers verstanden werden, bei welchem 90% aller Partikel kleiner als der dazu angegebene Durchmesser ist.

Unter der Angabe "D99" soll im Sinne der vorliegenden Erfindung vorzugsweise eine Verteilung des Partikeldurchmessers verstanden werden, bei welchem 99% aller Partikel kleiner als der dazu angegebene Durchmesser ist.

Die Verwendung von zwei mattierungsmittelhaltigen Zusammensetzungen, bei welcher die erste mattierungsmittelhaltige Zusammensetzung frei von einem Netzmittel ist und die zweite mattierungsmittelhaltige Zusammensetzung ein Netzmittel enthält, hat zu dem überraschenden Ergebnis geführt, dass das Netzmittel ein Verklumpen der Mattierungsmittelpartikel in der strahlungshärtbaren Zusammensetzung verhindert, ohne die Viskosität der strahlungshärtbaren Zusammensetzung herabzusetzen.

Bezüglich weiterer Merkmale und Vorteile des Verfahrens wird zur Vermeidung von Wiederholungen vollständig auf die im Rahmen des ersten Erfindungsaspekts gemachten Ausführungen Bezug genommen. Die dort insbesondere in Bezug auf die strahlungshärtbare, vorzugsweise UV-härtbare, Zusammensetzung beschriebenen Merkmale und Vorteile gelten sinngemäß auch für das Verfahren gemäß zweitem Erfindungsaspekt.

Gemäß einem dritten Aspekt betrifft die Erfindung ein Verfahren zum Beschichten, insbesondere Bedrucken, eines Substrats und/oder einer Substratoberfläche, insbesondere eines Glases und/oder einer Glasoberfläche aufweisend nachfolgende Schritte:
a) Aufbringen, insbesondere schichtförmiges Aufbringen, einer strahlungshärtbaren Zusammensetzung, insbesondere gemäß erstem Erfindungsaspekt, auf eine Oberfläche des Substrats und
b) Härten der aufgebrachten, insbesondere schichtförmig aufgebrachten, strahlungshärtbaren Zusammensetzung durch Einwirken elektromagnetischer Strahlung, insbesondere UV-Strahlung.

Ferner kann das Verfahren einen Schritt c) Erwärmen der aufgebrachten und gehärteten strählungshärtbaren Zusammensetzung aufweisen. Das Erwärmen erfolgt bei einer Temperatur von 150 °C, für 5 min. Der Schritt c) hat die vorteilhafte Auswirkung, dass nicht vollständig umgesetztes Monomer, umgesetzt werden und/oder abdampfen kann.

Die strahlungshärtbare, vorzugsweise UV-härtbare, Zusammensetzung kann grundsätzlich nur selektiv oder teilweise, das heißt nur bereichs- oder abschnittsweise, oder vollständig, das heißt vollflächig oder durchgehend, auf die Oberfläche des Substrats aufgebracht werden.

Bei dem Beschichten, insbesondere Bedrucken, eines Substrats und/oder einer Substratoberfläche, insbesondere eines Glases und/oder einer Glasoberfläche handelt es sich bevorzugt um einen Körperdruck, das heißt ein Beschichten, insbesondere Bedrucken, von gewölbten Oberflächen, insbesondere von Behältnissen, Flaschen, Verschlüssen, Gläsern, Tassen, sonstigen Hohlkörpern oder weitere Flüssigkeit nicht saugende Substrate.

Beim Durchführen von Schritt a) kann nur eine Schicht oder eine Vielzahl von Schichten der strahlungshärtbaren, vorzugsweise UV-härtbaren, Zusammensetzung auf die Oberfläche des Substrats aufgebracht werden.

Weiter können/kann der Schritt a) und/oder der Schritt b) mehrmals, insbesondere 1 mal bis 25 mal, bevorzugt 4 mal bis 15 mal, durchgeführt werden.

Das Aufbringen von nur einer Schicht kann auch als single-pass Druck bezeichnet werden. Das Aufbringen von einer Vielzahl von Schichten, insbesondere mehr als einer Schicht, kann auch als multi-pass Druck bezeichnet werden.

Im Falle eines mehrschichtigen Aufbringens der strahlungshärtbaren, vorzugsweise UV-härtbaren, Zusammensetzung auf die Oberfläche des Substrats, kann die strahlungshärtbare, vorzugsweise UV-härtbare, Zusammensetzung nach Aufbringen einer jeden einzelnen Schicht oder nach einem vollständigen Aufbringen, das heißt nach Aufbringen aller Schichten, der strahlungshärtbaren, vorzugsweise UV-härtbaren, Zusammensetzung auf die Oberfläche des Substrats gehärtet werden.

Weiter kann zum Durchführen von Schritt b) eine Quecksilberdampflampe oder eine UV-Leuchtdiode (UV-LED) verwendet werden. Mithilfe der Quecksilberdampflampe wird vorzugsweise eine UV-Strahlung in einem Wellenlängenbereich von 200 nm bis 450 nm erzeugt. Mithilfe der UV-Leuchtdiode wird vorzugsweise eine UV-Strahlung in einem Wellenlängenbereich von 360 nm bis 450 nm erzeugt.

Weiter können einzelne Schichten der aufgebrachten, strahlungshärtbaren, vorzugsweise UV-härtbaren, Zusammensetzung, insbesondere mit der UV-Leuchtdiode, nicht vollständig gehärtet werden, sondern es kann zunächst nur ein UV-Pinning der einzelnen Schichten erfolgen. Beim UV-Pinning wird eine Dosis von ultraviolettem (UV) Licht mit geringer Intensität auf eine UV-härtbare Zusammensetzung aufgebracht. Das Ergebnis ist, dass die UV-härtende Zusammensetzung in einen höheren Viskositätszustand übergeht, aber nicht vollständig aushärtet. Dies wird auch als "Gelieren" bezeichnet.

Weiter kann nach dem Schritt b) ein abschließendes Härten durch Einwirkung von UV-Strahlung erfolgen. Dies kann durch eine UV-Leuchtdiode mit hoher Strahlungsintensität und/oder eine Quecksilberdampflampe erfolgen.

Bevorzugt wird die strahlungshärtbare, vorzugsweise UV-härtbare, Zusammensetzung in einem Digitaldruckverfahren, insbesondere Tintenstrahldruckverfahren, auf die Oberfläche des Substrats aufgebracht.

Unter dem Ausdruck "Digitaldruckverfahren" soll im Sinne der vorliegenden Erfindung ein Druckverfahren verstanden werden, bei dem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei dem kleine Tröpfchen flüssiger Tinte erzeugt und auf ein Substrat aufgebracht werden. Dabei gibt es zum einen die Möglichkeit, einen kontinuierlichen Tintenstrahl zu erzeugen (Continuous Ink Jet, CIJ), oder zum anderen die Möglichkeit der diskontinuierlichen Erzeugung einzelner Tropfen, die nur bei Bedarf erzeugt und auf das Substrat übertragen werden (Drop-On Demand, DOD).

Weiter kann vor dem Aufbringen der strahlungshärtbaren, vorzugsweise UV-härtbaren, Zusammensetzung eine Primerzusammensetzung oder Unterdrucklackzusammensetzung schichtförmig, insbesondere in Form einer oder mehrerer Schichten, auf wenigstens einen Teil der Oberfläche des Substrats aufgebracht und anschließend die strahlungshärtbare, vorzugsweise UV-härtbare, Zusammensetzung in Form einer oder mehrerer Schichten auf die auf die Oberfläche des Substrats aufgebrachte Primer- oder Unterdrucklackzusammensetzung aufgebracht werden. Dabei kann die Primer- oder Unterdrucklackzusammensetzung grundsätzlich ebenfalls nur selektiv oder teilweise, das heißt nur abschnitts- oder bereichsweise, oder vollständig, das heißt vollflächig oder durchgehend, auf die Oberfläche des Substrats aufgebracht werden. Bei der Primer- oder Unterdrucklackzusammensetzung kann es sich um eine strahlungshärtbare, vorzugsweise UV-härtbare, oder um eine lösungsmittelbasierte Primer- oder Unterdrucklackzusammensetzung handeln. Insbesondere kann es sich bei der Primerzusammensetzung um eine UV-härtende Primerzusammensetzung, wie in der EP 3 453 687 A1 beschrieben, handeln. Der Offenbarungsgehalt der vorgenannten europäischen Offenlegungsschrift in Bezug auf die dort beschriebene UV-härtende Primerzusammensetzung wird durch ausdrückliche Bezugnahme zum Inhalt der vorliegenden Beschreibung gemacht.

Weiter kann das Substrat, vorzugsweise zur Änderung seiner Oberflächeneigenschaften, vor dem Aufbringen der strahlungshärtbaren, vorzugsweise UV-härtbaren, Zusammensetzung und/oder vor dem Aufbringen der strahlungshärtbaren, vorzugsweise UV-härtbaren, Primerzusammensetzung vorbehandelt werden. Beispielsweise kann das Substrat durch Beflammen und/oder flammenpyrolytisches Beschichten, insbesondere Silikatisieren, vorbehandelt werden. Eine solche Vorbehandlung kann beispielsweise zweckmäßig sein, wenn

Bezüglich weiterer Merkmale und Vorteile des Verfahrens wird zur Vermeidung von Wiederholungen vollständig auf die im Rahmen des ersten und zweiten Erfindungsaspekts gemachten Ausführungen Bezug genommen. Die dort insbesondere in Bezug auf die strahlungshärtbare, vorzugsweise UV-härtbare, Zusammensetzung beschriebenen Merkmale und Vorteile gelten sinngemäß auch für das Verfahren gemäß drittem Erfindungsaspekt.

Gemäß einem vierten Aspekt betrifft die Erfindung ein Substrat beschichtet, insbesondere bedruckt mit einer strahlungsgehärteten, vorzugsweise UV-gehärteten, Zusammensetzung, gemäß erstem Erfindungsaspekt.

Bevorzugt ist das Substrat mindestens teilweise mit einer strahlungsgehärteten, vorzugsweise UV-gehärteten, Zusammensetzung gemäß erstem Erfindungsaspekt beschichtet, insbesondere bedruckt.

Weiter bevorzugt handelt es sich bei dem Substrat um ein Material, welches keine Flüssigkeit aufnehmen kann, das heißt ein nicht Flüssigkeit saugendes Material, insbesondere Glas, Kunststoff oder Metall.

Bei dem Substrat kann es sich vorzugsweise um ein Substrat mit einer gewölbten Oberfläche, insbesondere Behältnisse, Flaschen, Verschlüsse, Gläser, Trinkgläser, Tassen oder sonstige Hohlkörper, handeln.

Bezüglich weiterer Merkmale und Vorteile des Substrats, insbesondere der strahlungsgehärteten, vorzugsweise UV-gehärteten, Zusammensetzung, wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Zusammensetzung erläuterten Merkmale und Vorteile gelten sinngemäß auch für das Substrat gemäß viertem Erfindungsaspekt.

### BEISPI ELTEI L

Weitere Vorteile und Aspekte der Erfindung ergeben sich aus den Ansprüchen und aus der Beschreibung von Ausführungsbeispielen der Erfindung, die nachfolgend anhand der Beispiele erläutert sind.

### Beispiel 1:

### Strahlungshärtbare Zusammensetzung:

| | |
|---|---|
| Monofunktionelles Monomer: | 3,3,5 Trimethyl Cyclohexyl Acrylat: 42% |
| Aminoplast: | Polymethylharnstoff (1.5 % mit einem mittleren Partikeldurchmesser > 1 µm): 30% |
| aminoplasthaltige Mischung: | Mischung enthaltend Polymethylharnstoff (1.2 % mit einem mittleren Partikeldurchmesser > 1 µm) und Polyurethan als Netzmittel: 10% |
| Dispergieradditiv: | Disperbyk-168: 2% |
| Bindemittel: | Aliphatisches Urethan Diacrylat: 6% |
| Stabilisator: | Genorad 20: 1% |
| Photoinititator: | Ethyl-(2,4,6-Trimethylbenzoyl)phenylphosphinat (TPO-L): 9 |

### Ergebnis:

Die Zusammensetzung erzielte einen Glanzgrad bei 60° von <40GU, insbesondre 40GU.

### Beispiel 2:

### Strahlungshärbare Zusammensetzung:

| | |
|---|---|
| Monofunktionelles Monomer: | 3,3,5 Trimethyl Cyclohexyl Acrylat: 24% |
| Aminoplast: | Polymethylharnstoff (1.5 % mit einem mittleren Partikeldurchmesser > 1 µm): 60% |
| Dispergieradditiv: | Disperbyk-168: 2% |
| Bindemittel: | Aliphatisches Urethan Diacrylat: 4% |
| Stabilisator: | Genorad 20: 1% |
| Photoinititator: | Ethyl-(2,4,6-Trimethylbenzoyl)phenylphosphinat (TPO-L): 9% |

### Ergebnis:

Die Zusammensetzung erzielte einen Glanzgrad bei 60° von <70 GE, insbesondre 70GU.

### Beispiel 3:

### Strahlungshärbare Zusammensetzung:

| | |
|---|---|
| Monofunktionelles Monomer: | 3,3,5 Trimethyl Cyclohexyl Acrylat: 44% |
| aminoplasthaltige Mischung: | Mischung enthaltend Polymethylharnstoff (1.2 % mit einem mittleren Partikeldurchmesser > 1 µm) und ein Polyurethan als Netzmittel: 40% |
| Dispergieradditiv: | Disperbyk-168: 2% |
| Bindemittel: | Aliphatisches Urethan Diacrylat: 4% |
| Stabilisator: | Genorad 20: 1% |
| Photoinititator: | Ethyl-(2,4,6-Trimethylbenzoyl)phenylphosphinat (TPO-L): 9% |

### Ergebnis:

Die Zusammensetzung erzielte einen Glanzgrad bei 60° von <100 GE, insbesondre 100GU.

## Patentansprüche

1. Strahlungshärtbare, vorzugsweise UV-härtbare, Zusammensetzung, aufweisend
- wenigstens ein monofunktionelles Monomer und/oder wenigstens ein multifunktionelles Monomer,
- wenigstens eine Photoinitiatorverbindung und
- wenigstens ein Mattierungsmittel
**dadurch gekennzeichnet, dass** das wenigstens eine Mattierungsmittel wenigstens ein Aminoplast ist.

2. Strahlungshärtbare Zusammensetzung nach Anspruch 1, **dadurch gekennzeichnet, dass** der wenigstens eine Aminoplast ein Polymethylharnstoff ist.

3. Strahlungshärtbare Zusammensetzung nach Anspruch 1 oder 2, **dadurch gekennzeichnet, dass** das wenigstens eine Mattierungsmittel einen Anteil von 10 Gew.-% bis 60 Gew.-%, insbesondere 15 Gew.-% bis 60 Gew.-%, vorzugsweise 20 Gew.-% bis 50 Gew.-%, aufweist, bezogen auf das Gesamtgewicht der Zusammensetzung.

4. Strahlungshärtbare Zusammensetzung nach einem der vorhergehenden Ansprüche, **dadurch gekennzeichnet, dass** die strahlungshärtbare Zusammensetzung neben dem wenigstens einen Aminoplast kein weiteres Mattierungsmittel aufweist.

5. Strahlungshärtbare Zusammensetzung nach einem der vorhergehenden Ansprüche, **dadurch gekennzeichnet, dass** die strahlungshärtbare Zusammensetzung wenigstens ein Netzmittel aufweist, insbesondere ein Polyurethan oder Mischungen von wenigstens zwei Polyurethanen.

6. Strahlungshärtbare Zusammensetzung nach einem der vorhergehenden Ansprüche, **dadurch gekennzeichnet, dass** das wenigstens eine Mattierungsmittel in Form von Partikeln vorliegt, insbesondere mit einem mittleren Partikeldurchmesser ≤ 10 µm, insbesondere von 0,5 µm bis 5 µm, vorzugsweise von 0,6 µm bis 1,3 µm.

7. Strahlungshärtbare Zusammensetzung nach einem der vorhergehenden Ansprüche, **dadurch gekennzeichnet, dass** das wenigstens eine Mattierungsmittel eine Mischung von wenigstens zwei unterschiedlichen Aminoplasten ist.

8. Strahlungshärtbare Zusammensetzung nach Anspruch 7, **dadurch gekennzeichnet, dass** die wenigstens zwei unterschiedlichen Aminoplasten voneinander unterschiedliche mittlere Partikeldurchmesser aufweisen.

9. Strahlungshärtbare Zusammensetzung nach einem der vorhergehenden Ansprüche, **dadurch gekennzeichnet, dass** das wenigstens eine monofunktionelle Monomer ein Acrylat-Monomer und/oder Methacrylat-Monomer ist, insbesondere ausgewählt aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 3,3,5-Trimethylcyclohexylacrylat, 4-Hydroxybutylacrylat, Isooctylacrylat, 2-(2-Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, 2-N-Morpholinoethylmethacrylat und Mischungen von wenigstens zwei der vorgenannten monofunktionellen Acrylat-Monomere und/oder Methacrylat-Monomere.

10. Strahlungshärtbare Zusammensetzung nach einem der vorhergehenden Ansprüche, **dadurch gekennzeichnet, dass** das wenigstens eine multifunktionelle Monomer ein Acrylat-Monomer und/oder Methacrylat-Monomer ist, insbesondere ausgewählt aus der Gruppe bestehend aus (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat und Mischungen von wenigstens zwei der vorgenannten multifunktionellen Acrylat-Monomere und/oder Methacrylat-Monomere.

11. Strahlungshärtbare Zusammensetzung nach einem der vorhergehenden Ansprüche, **dadurch gekennzeichnet, dass** der wenigstens eine Photoinitiator ausgewählt ist aus der Gruppe bestehend aus Ethyl-(2,4,6-Trimethylbenzoyl)phenylphosphinat, Isobutyldibenzoylphosphinoxid, Diphenyl-(2,4,6-trimethylbenzoyl)-phosphinoxid, 1-Methyl-(2,6-dimethoxybenzoyl)phenylphosphinoxid, Methylisobutyrylmethyl-phosphinat, Isopropylpivaloylphenylphosphinat, Methyl-p-toluoylphenylphosphinat, Methyl-o-toluoylphenylphosphinat, Isopropyl-p-tert-butylbenzoylphenylphosphinat, Methyl-acryloylphenylphosphinat, o-Toluoylphenylphosphinoxid, Vinyl-pivaloylphenylphosphinat, Methyl-pivaloylphenylphosphinat, Isopropylpivaloylphenylphosphinat, Bis(2,6-dichlorobenzoyl)phenylphosphinoxid, Bis(2,6-dichlorobenzoyl)-2,5-dimethylphenylphosphinoxid, Bis(2,6-dichlorobenzoyl)-4-ethoxy-phenylphosphinoxid, Bis(2,6-dichlorobenzoyl)-4-propylphenylphosphinoxid, Bis(2,6-dichloro-benzoyl)-2-naphtylphosphinoxid, Bis(2,6-dichlorobenzoyl)-1-naphtylphosphinoxid, Bis(2,6- dichlorobenzoyl)-4-chlorophenylphosphinoxid, Bis(2,6-dichlorobenzoyl)-2,4-dimethoxyphenylphosphinoxid, Bis(2,6-dichlorobenzoyl)ethylphosphinoxid, Bis(2,6- dichlorobenzoyl)-4-octylphenylphosphinoxid, Bis(2,4,6-trimethylbenzoyl)phenylphosphinoxid, Bis(2,4,6-trimethylbenzoyl)-2,5-dimethylphenylphosphinoxid, Bis(2,6-dichloro-3,4,5-trimethoxybenzoyl)-2,5-dimethylphenylphosphinoxid, Bis(2,6-dichloro-3,4,5-trimethoxybenzoyl)-4-ethoxyphenylphosphinoxid, Bis(2-methyl-1-naphthyl)-2,5-dimethylphenylphospinoxid, Bis(2-methyl-1-naphthyl)-4-ethoxyphenylphosphinoxid, Bis(2-methyl-1-naphthyl)-2-naphthylphosphinoxid, Bis(2-methyl-1-naphthyl)-4-propylphenylphosphinoxid, Bis(2-methyl-1-naphthyl)-2,5-trimethylphenylphosphinoxid, Bis(2-methoxy-1-naphthyl)-4-ethoxyphenylphosphinoxid, Bis(2-chloro-1-naphthyl)-2,5-dimethylphenylphosphinoxid, Bis(2,6-dimethoxybenzoyl)-2,4,6-trimethylpentylphosphinoxid und Mischungen von wenigstens zwei der vorgenannten Photoinitiatoren.

12. Strahlungshärtbare Zusammensetzung nach einem der vorhergehenden Ansprüche, **dadurch gekennzeichnet, dass** die strahlungshärtbare Zusammensetzung bei 40 °C und einer Schergeschwindigkeit von 2000 s-1 eine Viskosität von 3 mPas bis 50 mPas, insbesondere 4 mPas bis 40 mPas, vorzugsweise 5 mPas bis 20 mPas, aufweist.

13. Strahlungshärtbare Zusammensetzung nach einem der vorhergehenden Ansprüche, **dadurch gekennzeichnet, dass** die strahlungshärtbare Zusammensetzung einen Glanzgrad ≤ 60 GE, insbesondere von 55 GE bis 5 GE, vorzugsweise von 40 GE bis 15 GE, aufweist.

14. Verfahren zur Herstellung einer strahlungshärtbaren, vorzugsweise UV-härtbaren, Zusammensetzung, nach einem der vorhergehenden Ansprüche, aufweisend nachfolgende Schritte:
a) Bereitstellen einer ersten mattierungsmittelhaltigen Zusammensetzung und einer zweiten mattierungsmittelhaltigen Zusammensetzung,
b) Mischen der ersten mattierungsmittelhaltigen Zusammensetzung und der zweiten mattierungsmittelhaltigen Zusammensetzung
**dadurch gekennzeichnet, dass**
- das Mattierungsmittel der ersten mattierungsmittelhaltigen Zusammensetzung einen von dem Mattierungsmittel der zweiten mattierungsmittelhaltigen Zusammensetzung verschiedene mittlere Partikeldurchmesserverteilung aufweist und/oder
- die erste mattierungsmittelhaltige Zusammensetzung frei von einem Netzmittel ist und die zweite mattierungsmittelhaltige Zusammensetzung ein Netzmittel enthält.

15. Verfahren zum Beschichten, insbesondere Bedrucken, eines Substrats aufweisend nachfolgende Schritte:
a) Aufbringen, insbesondere schichtförmiges Aufbringen, einer strahlungshärtbaren Zusammensetzung nach einem der Ansprüche 1 bis 14 auf eine Oberfläche des Substrats und
b) Härten der aufgebrachten, insbesondere schichtförmig aufgebrachten, strahlungshärtbaren Zusammensetzung durch Einwirken elektromagnetischer Strahlung, insbesondere UV-Strahlung.

16. Verfahren zum Beschichten nach Anspruch 15 **dadurch gekennzeichnet, dass** beim Durchführen von Schritt a) die strahlungshärtbare, vorzugsweise UV-härtbare, Zusammensetzung in einem Digitaldruckverfahren, insbesondere Tintenstrahldruckverfahren, auf die Oberfläche des Substrats aufgebracht wird.

17. Substrat, beschichtet, insbesondere bedruckt, mit einer strahlungsgehärteten, vorzugsweise UV-gehärteten, Zusammensetzung nach einem der Ansprüche 1 bis 13.
